# EUROPEAN PATENT SPECIFICATION

(11) **EP 0 951 621 B1**
(45) Date of publication and mention of the grant of the patent: **22.10.2003**
(21) Application number: 98900243.1
(22) Date of filing: 07.01.1998
(51) Int. Cl.: F16K 1/02, F16K 1/50, F16K 25/04, F16K 31/50, F16K 39/02

(54) **VALVE CARTRIDGE FOR LIFT VALVE HAVING THE CLOSING PRESSURE ON THE SEALING LIMITED**
VENTILKARTUSCHE FÜR EIN SITZVENTIL MIT BEGRENZUNG VON DEM SCHLIESSDRUCK AUF DER DICHTUNG
CARTOUCHE DE SOUPAPE POUR SOUPAPE A LEVEE VERTICALE AVEC LIMITATION DE LA PRESSION DE FERMETURE S'EXER ANT SUR LE JOINT D'ETANCHEITE

(30) Priority: 07.01.1997 AU PO004497
(43) Date of publication of application: 27.10.1999
(73) Proprietor: Wavtech PTY. Ltd., Wembley, W.A. 6014 (AU)
(72) Inventor: BURKE, Peter, Ashley, Osborne Park Western Australia 6060 (AU); FRIDLENDER, Charles, Noranda, W.A. 6062 (AU); LEEMING, Alan, Joondanna, W.A. 6060 (AU)
(74) Representative: Mosey, Stephen George
(86) International application number: AU9800006
(87) International publication number: WO98030820

(56) References cited:
- EP-A- 0 387 179
- EP-A- 0 708 285
- AU-A- 3 104 389
- AU-A- 6 573 786
- AU-B- 610 090
- US-A- 4 468 001
- US-A- 4 778 149

## Description

### Field of the Invention

The present invention relates to a valve cartridge for fitting into a valve and, in particular, but not exclusively, to a valve cartridge for fitting into a domestic tap.

### Background of the Invention

Domestic taps typically have an inlet which is adapted for coupling to a water pipe, a bulbous body in which is disposed a valve seat and valve cartridge, and an outlet in the form of a spout through which water can flow. The valve cartridge is provided with a stem having a handle located outside the body at one end and a washer located within the body at an opposite end for sealing against the valve seat. By turning on the handle, the stem is rotated about its longitudinal axis so as to axially move within the tap body. To close the tap, the handle is turned in a first direction so as to screw down the stem and push the washer against the valve seat. To open the tap, the handle is turned in the opposite direction and the washer is displaced upward by fluid pressure to allow water to flow through the valve seat and out the outlet.

The main cause of leakage in such taps is due to wear of the washer. This wear is usually caused by over-tightening of the handle and stem which leads to tearing, cutting or fracturing of the washer. Washers are normally loosely held within the bottom of the stem so that the two can rotate relative to each other. However, when the stem is over-tightened, the washer can also turn with the stem to accelerate wear against the valve seat.

This problem has already been adressed in AU-B-610090. There is, however, a need for a simplified construction of the cartridge.

### Summary of the Invention

It is an object of the present invention to provide a valve cartridge for insertion into a valve, such as a domestic tap, in which the above problems arising from over-tightening can be substantially avoided and which is of simple construction.

According to one aspect of the present invention there is provided a valve cartridge for a valve having a fluid inlet, a fluid outlet, and a valve seat providing fluid communication between said fluid inlet and fluid outlet, said valve cartridge including:
a housing adapted for coupling to said valve, said housing provided with an axially extending first cavity;
a piston movable within said first cavity for controlling flow of fluid through said valve;
a flow chamber element provided at one end of said housing and through which said piston can travel, said flow chamber element having a first seal for sealing against said valve seat and a piston seal downstream of said first seal against which said piston can seal to prevent flow of fluid through said flow chamber element, said flow chamber element further including stop means for stopping said piston from moving axially therebeyond the stop means including a plurality of spaced apart lugs formed about the circumference at one end of said flow chamber element so as to abut said one end of said housing, said lugs extending radially into said first cavity so as to stop said piston from moving therebeyond, the spaces between adjacent lugs forming openings through which fluid can flow when in transit from said inlet to said outlet, said piston and flow chamber element juxtaposed relative to said valve so that the pressure of the fluid acts in a direction tending to force said piston against said piston seal; and,
an actuator for moving said piston axially without rotation between a closed position in which said piston abuts said piston seal with a predetermined pressure to prevent flow of fluid through said flow chamber element, and a fully open position in which said piston is displaced from said piston seal and abuts said stop means to provide maximum fluid flow through said flow chamber element;
whereby, when said housing is coupled to said valve, said first seal abuts said valve seat and said actuator can be operated to move said piston axially through said cavity between said closed position and said fully open position to control the flow of fluid from said inlet to said outlet.

Preferably said flow chamber element is formed separately from said housing and is frictionally coupled to said one end of said housing.

Preferably said one end of said housing is formed with a circumferential rebate for receiving said lugs.

Preferably the outer diameter of said circumferential rebate is smaller than the outer diameter of said lugs so that a press-fit is formed between said circumferential rebate and said lugs to hold said flow chamber to said housing.

Preferably said flow chamber element, comprises a first part which includes said lugs and said piston seal, and a second part which includes said first seal, said first and second parts being press-fit together.

Preferably said first and second parts define a second cavity therebetween in which a non-return valve is housed for preventing flow of fluid through said flow chamber element in the direction from said outlet to said inlet.

Preferably said actuator comprises a solenoid which is coupled to said piston.

Preferably the linear position of said solenoid within said housing can be varied to vary the position of the piston when in the fully opened position to progressively vary the flow of fluid through said valve.

In an alternate embodiment, said actuator comprises a spindle rotatably supported by said housing and extending through said first cavity said spindle coupled to said piston in a manner so that rotation for a predetermined number of revolutions of said spindle in a first sense causes relative axial movement between said piston and said spindle in a first direction whereupon the relative axial position of said spindle and piston remains unchanged in response to further rotation of said spindle in said first sense, and rotation for a predetermined number of revolutions of said spindle in an opposite sense causes relative axial movement between said piston and said spindle in an opposite direction whereupon the relative axial position of said spindle and said piston remains unchanged in response to further rotation of said spindle in said opposite sense.

This embodiment also includes, a coupling means for coupling said spindle to said piston with the piston coupled to said coupling means in a manner so as to allow relative rotation between said piston and said coupling means.

Preferably said valve cartridge further comprises detent means or ratchet mechanism acting between said coupling means and said housing to resist rotation of said coupling means during said predetermined number of revolutions of said spindle.

Preferably said detent means or ratchet mechanism includes a plurality of axially extending grooves formed on a circumferential surface of said first cavity and at least one protrusion coupled to said coupling means for receipt in one of said grooves.

Preferably said coupling means is provided with at least one extending finger on each of which one of said projections is formed.

Preferably said finger adapted to flex in the radial direction.

Preferably said coupling means is further provided with a screw thread for threadingly engaging said spindle.

Preferably said coupling means further includes a circumferential groove for engaging a lip which is formed on and extends partially about the circumference of said piston, thereby facilitating said relative rotation between said piston and said coupling means.

Preferably said coupling means is provided with a circumferential seal disposed between said finger and said groove.

According to another aspect of the present invention there is provided a valve cartridge for a valve having a fluid inlet, a fluid outlet, and a valve seat providing fluid communication between said fluid inlet and fluid outlet, said valve cartridge including:
a housing adapted for coupling to said valve, said housing provided with an axially extending first cavity;
a piston movable within said first cavity for controlling flow of fluid through said valve;
a flow chamber element provided at one end of said housing and throngh which said piston can travel, said flow chamber element having a first seal for sealing against said valve seat and a piston seal downstream of said first seal against which said piston can seal to prevent flow of fluid through said flow chamber element, said flow chamber element further including stop means for stopping said piston from moving axially therebeyond, the stop means including a plurality of spaced apart lugs formed about the circumference at one end of said flow chamber element so as to abut said one end of said housing, said lugs extending radially into said first cavity so as to stop said piston from moving therebeyond, the spaces between adjacent lugs forming openings through which fluid can flow when in transit from said inlet to said outlet, said piston and flow chamber element juxtaposed relative to said valve so that the pressure of the fluid acts in a direction tending to force said piston against said piston seal; and,
a solenoid for moving said piston axially without rotation between a closed position in which said piston abuts said piston seal with a predetermined pressure to prevent flow of fluid through said flow chamber element, and a fully open position in which said piston is displaced from said piston seal and abuts said stop means to provide maximum fluid flow through said flow chamber element;
whereby, when said housing is coupled to said valve, said first seal abuts said valve seat and said solenoid can be operated to move said piston axially through said cavity between said closed position and said fully open position to control the flow of fluid from said inlet to said outlet.

### Brief Description of the Drawings

Embodiments of the present invention will now be described by way of example only with reference to the accompanying drawings in which:
- Figure 1: is a longitudinal section view for a valve cartridge in accordance with a first embodiment of the invention;
- Figure 2: is an exploded and partial cut away perspective view of the valve cartridge shown in Figure 1;
- Figure 3: is a longitudinal section view of a second embodiment of the valve cartridge; and,
- Figure 4: is a schematic representation of a valve in which embodiments of the valve cartridge can be used.

### Detailed Description of the Preferred Embodiments

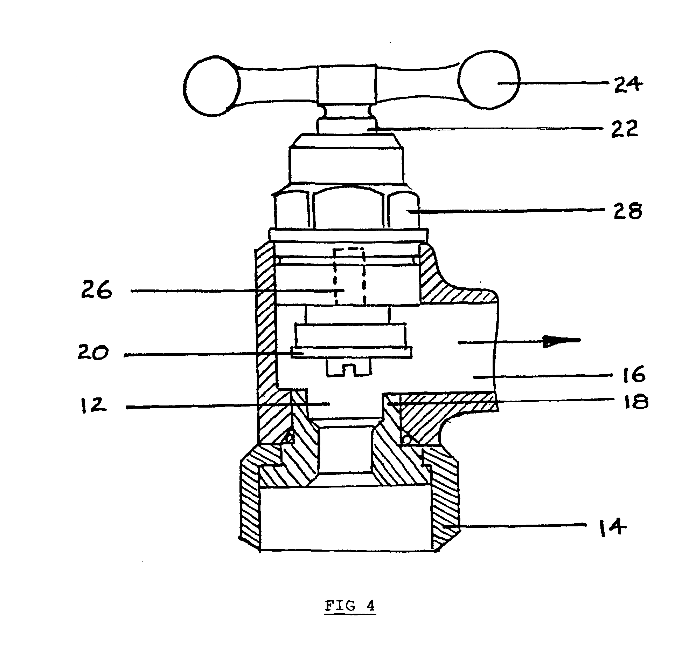

A valve 10 in the form of a domestic tap (Figure 4), comprises a valve body 12 having an inlet 14 at one end and an outlet 16 at an opposite end. A valve seat 18 provides fluid communication between the inlet 14 and outlet 16. Whether or not fluid flows through valve 10 is dependent upon the position of a washer 20 which can be moved into sealing engagement with the seat 18 by rotation of a spindle 22 and associated handle 24. The washer 20 includes a stem 26 which is received within a blind hole formed in the spindle 22. The spindle 22 is mounted within the body 12 in a manner so as to move axially up or down as it is turned anticlockwise or clockwise respectively. Thus, to close the valve 10 the spindle 22 is turned clockwise to push the washer 20 against the valve seat 18. The downward pressure on the washer 20 can be increased by turning harder on the spindle 22. The pressure applied may be sufficient so as to also cause the washer 20 to rotate with the spindle 22. As discussed above, the application of excess pressure can damage the washer 20 to the extent that it no longer forms a seal with the seat 18 so that fluid can leak from the inlet 16 when it is otherwise intended that the valve 10 be closed. The spindle 22 is rotatably held within a crown 28 which is screwed to the body 12.

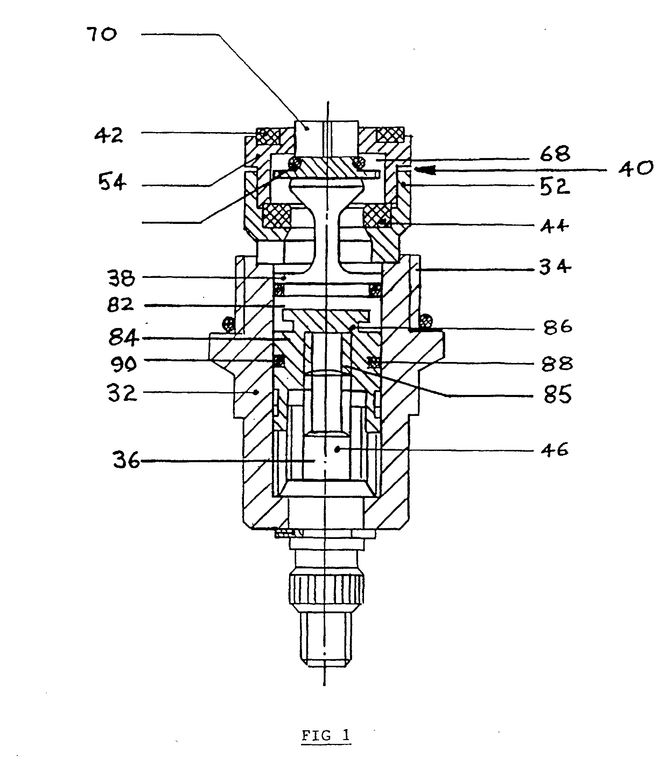

Embodiments of the present valve cartridge 30 shown in Figures 1-3 were developed with a view to replacing the washer 20, spindle 22, and crown 28 of a conventional tap or valve 10. However, these and other embodiments may be used in different types of valves and in different applications (eg. in valves in white goods or in parts washing machines).

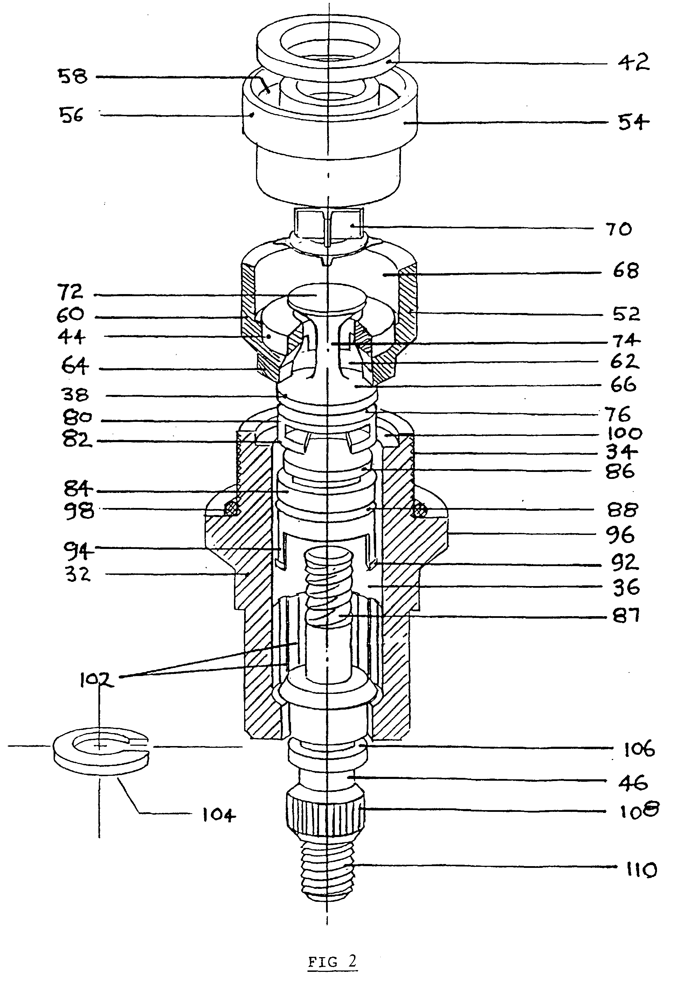

In the embodiment shown in Figures 1 and 2, the valve cartridge 30 comprises a housing 32 which is adapted for coupling to a tap 10 by virtue of a screw thread 34 provided about an outer circumferential surface of an upper length of the housing 32. An axially extending cavity 36 is formed centrally through the housing 32. Disposed, at least partially, within the cavity 36 is a piston 38 which, as explained in greater detail below, can be moved axially to open and close a valve 10 in which the cartridge 30 is installed. A flow chamber element 40 is provided at the end of the housing 32 which carries the thread 34. The flow chamber element 40 includes a first seal 42 for sealing against valve seat 18 of valve 10. Also retained within the flow chamber element 40 is a piston seal 44 against which the piston 38 can abut to prevent the flow of fluid (eg. water) through the flow chamber. When the piston 38 is moved from the seal 44, water can flow through the chamber element 40 and thus through the valve 10.

The piston 38 is moved axially by an actuator, without rotation, between a closed position in which it abuts the seal 44 and a fully open position in which it is spaced by a maximum predetermined distance from the seal 44.

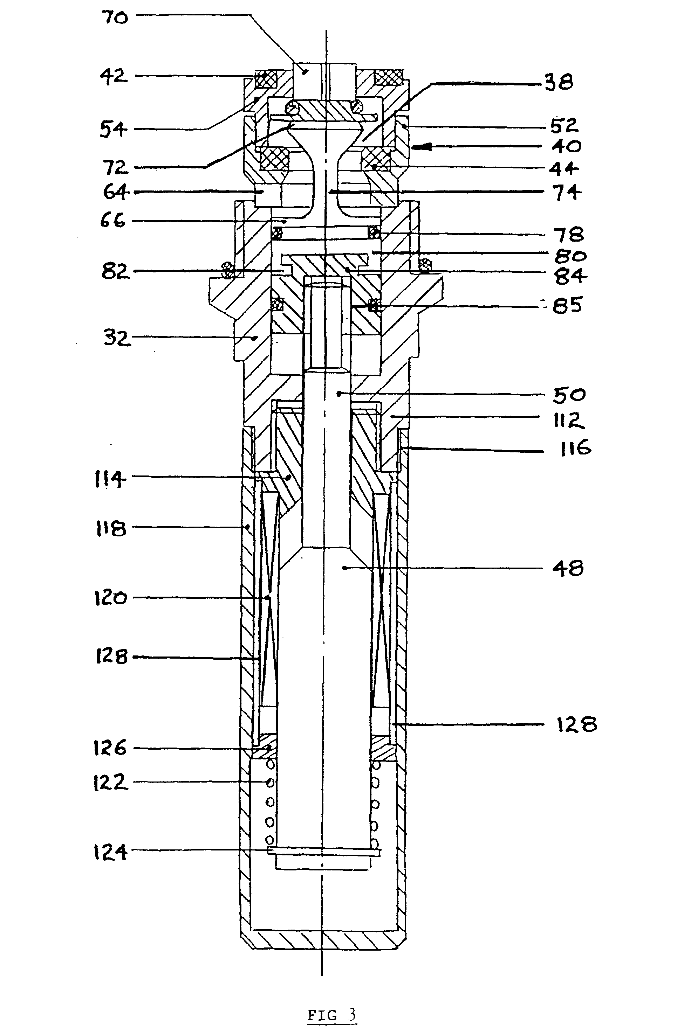

In the embodiment shown in Figures 1 and 2, the actuator is in the form of a rotatable spindle 46. In the embodiment shown in Figure 3, the actuator is in the form of a solenoid 48 with push rod 50. As will be explained in greater detail, both the spindle 46 and solenoid/push rod 50 act to move the piston 38 axially without any rotation and to close the piston 38 onto the seal 44 with a predetermined pressure.

In order to utilise the cartridge 30, the housing 32 is threadingly coupled by thread 34 to the valve body 12. The first seal 42 seals against the valve seat 18. To control the flow of water through the tap 10 between the inlet 14 and outlet 16, the piston 38 is axially moved within the housing 32 and flow chamber element 40 between the closed position in which it abuts the piston seal 44 and a fully open position in which it is spaced by some maximum distance from the seal 44 to provide maximum water flow.

The present embodiments will now be looked at in somewhat greater detail.

The flow chamber element 40 is made from two main parts 52 and 54 which are press-fit together. Part 54 which is at the distant end of the cartridge 30 is substantially cylindrical in form with an increased diameter portion 56 (refer Figure 2) at the upstream end. The increased diameter portion 56 is provided with an annular recess 58 for seating the seal 42. The first part 52 is also substantially cylindrical in form but is provided with a radially inwardly extending wall 60 at an end adjacent the housing 32. A hole 62 coaxial with cavity 36 and through which the piston 38 extends is formed in the wall 60. The piston seal 44 is seated on the interior surface of the wall 60. Stop means in the form of spaced apart lugs 64 are formed about the circumference of the first part 52 on the side of wall 60 opposite the piston seal 44. The lugs 64 extend radially inwardly into the cavity 36 so as to be able to abut base 66 of the piston 38.

The second part 54 press-fits into the first part 52 to the extent that it bears against the piston seal 44. When the first and second parts 52 and 54 are press-fit together, they define a cavity 68 in which is housed a non-return valve 70. The non-return valve 70 is arranged so as to prevent the flow of water in the direction from the outlet 16 to inlet 14. The components of the flow chamber 40 are dimensioned so that even when piston 38 is in the fully open position (ie. spaced from the seal 44 by a maximum displacement), it does not cause the non-return valve 70 to close the flow chamber 40.

Piston 38 comprises a disc-like head 72 which tapers to a stem 74 on the side which abuts the piston seal 44. The stem 74 is integrally formed with base 66. The base 66 is disc like and is formed with a circumferential groove 76 which receives an O-ring 78. An axially extending wall 80 is provided partially about the circumference of base 66 on a side opposite the stem 74. An inwardly extending lip 82 is formed along the circumferential end of wall 80.

Piston 38 is coupled to spindle 46 by coupling 84. The coupling 84 includes a knob 86 at one end which can be received by the lip 82 so as to couple the piston 38 to the coupling 84 in a manner which allows relative rotation therebetween. A circumferential groove 88 is formed about the exterior surface of the coupling 84 for receiving O-ring 90 (shown in Figure 1). A blind threaded hole 85 is cut axially in the coupling 84 for engaging thread 87 of spindle 46. A number of spaced apart fingers 94 which extend in the axial direction are provided about the circumference of the coupling 84 at an end opposite the knob 86. A projection 92 is formed at the tip of each finger on a side facing the circumferential wall of the cavity 36.

Housing 32 is provided with an annular flange 96 adjacent the inboard end of thread 34. The flange 96 forms a seat for O-ring 98. When the cartridge 30 is screwed into valve 10, the flange 96 presses the O-ring 98 onto the body 12 to form a fluid seal. A rebate 100 is formed in the housing 32 at an opposite end of the thread 34 for receiving the lugs 64. The outer diameter of the rebate 100 is slightly smaller than the outer diameter of the lugs 64 so as to form a press-fit between the chamber 40 and housing 32.

The circumferential surface of cavity 36 at an end opposite the rebate 100 is provided with a plurality of spaced apart axially extending grooves 102. The grooves 102 together with fingers 94 and projections 92 form a detent means or system, or perhaps more accurately a ratchet mechanism, for resisting rotation of the coupling 84, and thus the piston 38, when the spindle 46 is turned clockwise or anticlockwise.

The spindle 46 is rotatably held and axially fixed within the housing 32 by a circlip or lock washer 104 which sits within a circumferential groove 106 formed about a part of the spindle 46 that lies outside of the body 32. The remaining length of the spindle 46 outside of the body 32 is formed in a conventional manner and includes a knurled boss 108 and threaded rectangular section post 110 for receiving a conventional handle such as handle 24 shown in Figure 4.

When the cartridge 30 is fully assembled as shown in Figure 2, the thread 87 of spindle 46 engages the thread in blind hole 85 of the coupling 84, the knob 86 is received by the lip 82, the head 72 of the piston 38 is disposed within cavity 68 and the flow chamber element 40 is press-fit onto the body 32. Housing 32 is coupled to the valve 10 by screw thread 34 and the first seal 42 seals against the valve seat 18. Assume that the piston 38 is in the closed position so that head 72 abuts against piston seal 44. In this configuration, the spindle 46 is screwed in the blind hole 85 of coupling 84 as far as possible. If one were to attempt to "further close" the valve 10 by turning spindle 64 in the clockwise direction, all that would happen is that the spindle 46 and coupling 84 will turn together within the housing 32 (the projections 92 ratcheting across grooves 102) with the piston 38 remaining stationary. The piston 38 remains stationary because the knob 86 simply turns inside the lip 82. Therefore, no matter how much one continues to rotate the spindle 46 in the clockwise direction, the axial and rotational (angular) position of the piston 38 remains unchanged. Therefore, it is not possible for the piston 38 to apply any further pressure on the seal 46, and there is no relative rotational movement between the piston head 72 and the seal 44.

To open the valve 10 the spindle 46 can now be rotated in an anticlockwise direction. Because the spindle 46 is axially fixed to the housing 32, this rotation forces the coupling 84 and thus piston 38 axially away from the spindle 46. This lifts the piston head 72 from the seal 44 allowing water to flow through the flow chamber element 40, hole 62 and the spaces between the lugs 64. Rotation of the coupling 84 prior to the piston 34 being moved to its fully opened position is resisted by, the projections 92 being located within respective ones of the grooves 102. (If the coupling 84 were to rotate at this time with the spindle 46, the piston would not move axially and there be stuck in one position).

The spindle 46 is prevented from disengaging from the coupling 84 by abutment of the lugs 64 with the base 66 of the piston 38. This abutment also denotes the fully open position of the cartridge 30. Any further rotation of the spindle 46 in the clockwise direction results in the coupling 84 turning with the spindle 46 with the knob 86 turning inside the lip 82. At this point, the projections 92 are outside of the grooves 102 or alternately the fingers 94 can flex inwardly to ratchet grooves 102 thereby allowing the coupling 84 to turn.

In the second embodiment of the cartridge 130 shown in Figure 3 like numbers are used to denote like features. The main difference between cartridge 30 shown in Figures 1 and 2 and cartridge 130 is that the spindle 46 is replaced by the solenoid 48 and push rod 50. Further, as the push rod 50 only moves in an axial direction the detent means composed of the fingers 94, projections 92, and grooves 102 is not required in this embodiment. The push rod 50 is connected with the coupling 84 in a fixed manner so that there is no relative movement either axial or rotational therebetween.

The end of housing 32' opposite the flow chamber 40 is also of a slightly different configuration in order to allow connection to the solenoid 48. This end is provided with a threaded boss 112 for receiving a mounting thread 114 of the solenoid 48. A circumferential recess 116 is also formed about the free end of the boss 112 to receive solenoid housing 118. Enclosed within housing 118 is the solenoid coil 120 and solenoid return spring 122. The return spring 122 is bound between washer 124 located about an end of push rod 50 distant housing 32' and a base plate 126 spaced from the washer 124 toward the housing 32'. Base plate 126 is seated on shoulder 128 formed on the inner circumferential surface of the housing 118. Current carrying wires for energising the coils 120 pass through the housing 118, but are not shown in this figure.

When the solenoid 48 is energised the push rod 50 moves linearly toward flow chamber 40 lifting the piston 38 from the seal 44. This allows water to flow through the flow chamber 40 from inlet 14 to outlet 16. When the solenoid 48 is de-energised the return spring 120 forces the push rod 50 to move linearly away from flow chamber 40 thereby pressing the piston 38 and particular piston head 72 against the seal 44. This closes the flow chamber element 40 preventing the flow of water from inlet 14 the outlet 16. The pressure applied by the piston to the seal 44 is fixed by the return spring 122.

As in cartridge 30, it is not possible in cartridge 130 to apply any further or otherwise excessive force or pressure to the seal 44. Additionally as the push rod 50 moves solely in the axial direction without any rotation, the piston 38 does not rotate. Even if for some reason while moving axially the push rod 50 were to rotate the coupling between the knob 86 and lip 82 would ensure that rotational motion is not imparted to the piston 38. Indeed, as the rotation of push rod 50 is in practice exceedingly unlikely and even if it did occur it would be negligible the coupling 84' could be completely dispensed with and the push rod 50 connected directly to the piston 38. However, for the purposes of interchangeability and simplified manufacture, it is preferred that coupling 84' be incorporated in cartridge 130.

It will be further noted that when the solenoid 48 is energised the spacing of the piston head 72 from valve seat 44 is controlled by abutment of base 66 with the lugs 64.

Now that embodiments of the valve cartridge have been described in detail it will be apparent to those skilled in the relevant arts that numerous modifications and variations may be made. For example, in the cartridge 30 shown in Figures 1 and 2 the axial position of spindle 46 is fixed while the axial position of coupling 84 can vary in response to rotation of the spindle 46. However, this can be reversed with the axial position of the spindle 46 being variable and the actual position of the coupling 84 being fixed.

Also, the knob 86 and lip 82 arrangement for providing rotational coupling between the piston 38 and coupling 84 can be replaced with any mechanical equivalent which achieves the same effect. It will be recalled that the spindle 46 cannot be screwed entirely out of the coupling 84 because of the abutment between lugs 64 and base 66 of the piston 38. However, in an earlier working prototype maintaining a connection between the spindle 46 and coupling 84 was achieved by providing a circumferential flange about the spindle 46 adjacent thread 87 and forming diametrically opposed claws on the coupling 84 which can grip the flange. The claws were in the form of upstanding lugs which extend partially about the circumference of the coupling 84 and each provided with a lip on its inner surface which extends radially inwardly for sitting over the flange. The upstanding lugs are either made of flexible material or flexibly mounted on the coupling 84 so that they can be pushed apart by the flange when the spindle 46 is initially threaded into the coupling 84. With this arrangement, when the spindle is rotated a predetermined number of revolutions in the anti-clockwise direction, moving the piston 38 to the fully opened position, the flange about the spindle 46 abuts the lips on the upstanding lugs. Because the lugs are housed within the cavity 36 they are prevented from flexing radially outwardly in response to further anti-clockwise rotation of the spindle 46. In this way the coupling 84 and spindle 46 are effectively locked together so that the coupling 84 now rotates with the spindle 46 in response to any further rotation in the anti-clockwise direction.

With cartridge 130 modifications can be made so as to allow the amount of separation between the piston head 72 and seal 44 to be varied. This provides a variable flow control of the solenoid operated valve cartridge 130. This can be achieved either mechanically or electrically.

Embodiments of this invention can of course be used in valves for controlling flow of gases and other fluids.

The component parts of the valve cartridges 30 and 130 can be made of plastics materials and/or metals or metal alloys such as brass.

All such modifications and variations are deemed to be within the scope of the present invention, the nature of which is to be determined from the foregoing description and the appended claims.

## Claims

1. A valve cartridge for a valve having a fluid inlet (14), a fluid outlet (16), and a valve seat (18) providing fluid communication between said fluid inlet and fluid outlet, said valve cartridge including:
a housing (32) adapted for coupling to said valve, said housing provided with an axially extending first cavity (36);
a piston (38) movable within said first cavity for controlling flow of fluid through said valve;
a flow chamber element (40) provided at one end of said housing and through which said piston can travel, said flow chamber element having a first seal (42) for sealing against said valve seat and a piston seal (44) downstream of said first seal against which said piston can seal to prevent flow of fluid through said flow chamber element, said flow chamber element further including stop means for stopping said piston from moving axially therebeyond, the stop means including a plurality of spaced apart lugs (64) formed about the circumference at one end of said flow chamber element so as to abut said one end of said housing, said lugs extending radially into said first cavity (36) so as to stop said piston (38) from moving therebeyond, the spaces between adjacent lugs (64) forming openings through which fluid can flow when in transit from said inlet to said outlet, said piston and flow chamber element juxtaposed relative to said valve so that the pressure of the fluid acts in a direction tending to force said piston against said piston seal (44); and,
an actuator (46) for moving said piston axially without rotation between a closed position in which said piston (38) abuts said piston seal (44) with a predetermined pressure to prevent flow of fluid through said flow chamber element, and a fully open position in which said piston is displaced from said piston seal and abuts said stop means to provide maximum fluid flow through said flow chamber element;
whereby, when said housing is coupled to said valve, said first seal (42) abuts said valve seat and said actuator (46) can be operated to move said piston axially through said cavity between said closed position and said fully open position to control the flow of fluid from said inlet to said outlet.

2. A valve cartridge according to claim 1 wherein, said flow chamber element (40) is formed separately from said housing and is frictionally coupled to said one end of said housing.

3. A valve cartridge according to claim 2 wherein, said one end of said housing is formed with a circumferential rebate (100) for receiving said lugs (64).

4. A valve cartridge according to claim 4 wherein, the outer diameter of said circumferential rebate (100) is smaller than the outer diameter of said lugs (64) so that a press-fit is formed between said circumferential rebate and said lugs to hold said flow chamber element to said housing.

5. A valve cartridge according to claim 1 wherein, said flow chamber element (40) comprises a first part (52) which includes said lugs (64) and said piston seal (44), and a second part (54) which includes said first seal (42), said first and second parts being press-fit together.

6. A valve cartridge according to claim 5 wherein, said first (52) and second (54) parts define a second cavity (68) therebetween in which a non-return valve (70) is housed for preventing flow of fluid through said flow chamber element in the direction from said outlet to said inlet.

7. A valve cartridge according to claim 6 wherein, said actuator comprises a solenoid (48) which is coupled to said piston (38).

8. A valve cartridge according to claim 7 wherein, the linear position of said solenoid (48) within said housing can be varied to vary the position of the piston (38) when in the fully opened position to progressively vary the flow of fluid through said valve.

9. A valve cartridge according to claim 6 wherein, said actuator comprises a spindle (46) rotatably supported by said housing and extending through said first cavity (36) said spindle coupled to said piston in a manner so that rotation for a predetermined number of revolutions of said spindle in a first sense causes relative axial movement between said piston and said spindle in a first direction whereupon the relative axial position of said spindle and piston remains unchanged in response to further rotation of said spindle in said first sense, and rotation for a predetermined number of revolutions of said spindle in an opposite sense causes relative axial movement between said piston and said spindle in an opposite direction whereupon the relative axial position of said spindle and said piston remains unchanged in response to further rotation of said spindle in said opposite sense.

10. A valve cartridge according to claim 9, further including a coupling means (84) for coupling said spindle (46) to said piston (38) with the piston coupled to said coupling means in a manner so as to allow relative rotation between said piston and said coupling means.

11. A valve cartridge according to claim 10, further including detent means (92, 94, 102) or ratchet mechanism acting between said coupling means (84) and said housing (32) to resist rotation of said coupling means during said predetermined number of revolutions of said spindle.

12. A valve cartridge according to claim 11 wherein, said detent means or ratchet mechanism includes a plurality of axially extending grooves (102), formed on a circumferential surface of said first cavity (36) and at least one protrusion (92) coupled to said coupling means for receipt in one of said grooves.

13. A valve cartridge according to claim 12 wherein, said coupling means (84) is provided with at least one extending finger (94) on each of which one of said projections (92) is formed.

14. A valve cartridge according to claim 13 wherein, said coupling means (84) further includes a circumferential groove (88) for engaging a lip (82) which is formed on and extends partially about the circumference of said piston (38), thereby facilitating said relative rotation between said piston and said coupling means.

15. A valve cartridge for a valve having a fluid inlet (14), a fluid outlet (16), and a valve seat (18) providing fluid communication between said fluid inlet and fluid outlet, said valve cartridge including:
a housing (32) adapted for coupling to said valve, said housing provided with an axially extending first cavity (36);
a piston (38) movable within said first cavity for controlling flow of fluid through said valve;
a flow chamber element (40) provided at one end of said housing and through which said piston can travel, said flow chamber element having a first seal (42) for sealing against said valve seat and a piston seal (44) downstream of said first seal against which said piston can seal to prevent flow of fluid through said flow chamber element, said flow chamber element further including stop means for stopping said piston from moving axially therebeyond, the stop means including a plurality of spaced apart lugs (64) formed about the circumference at one end of said flow chamber element so as to abut said one end of said housing, said lugs extending radially into said first cavity (36) so as to stop said piston (38) from moving therebeyond, the spaces between adjacent lugs (64) forming openings through which fluid can flow when in transit from said inlet to said outlet, said piston and flow chamber element juxtaposed relative to said valve so that the pressure of the fluid acts in a direction tending to force said piston (38) against said piston seal (44); and,
a solenoid (48) for moving said piston axially without rotation between a closed position in which said piston abuts said piston seal with a predetermined pressure to prevent flow of fluid through said flow chamber element and a fully open position in which said piston is displaced from said piston seal and abuts said stop means to provide maximum fluid flow through said flow chamber element;
whereby, when said housing is coupled to said valve, said first seal abuts said valve seat and said solenoid (48) can be operated to move said piston axially through said cavity between said closed position and said fully open position to control the flow of fluid from said inlet to said outlet.

## Patentansprüche

1. Eine Ventilpatrone für ein Ventil, das einen Flüssigkeitseinlass (14), einen Flüssigkeitsabfluss (16) und einen Ventilsitz (18) hat und die Flüssigkeitsübermittlung zwischen besagtem Flüssigkeitseinlass und Flüssigkeitsabfluss herstellt; besagte Ventilpatrone schließt mit ein:
ein der Kupplung zu besagtem Ventil angepasstes Gehäuse (32), besagtes Gehäuse ist mit einer axial verlängerten ersten Kammer (36) versehen;
ein sich innerhalb der ersten Kammer bewegender Kolben (38) zur Regulierung des Flüssigkeitstroms durch besagtes Ventil;
ein an einem Ende des besagten Gehäuses angebrachtes Flusskammerelement (40) und durch welches sich der besagte Kolben bewegen kann, besagtes Flusskammerelement hat eine erste Dichtung (42) zum Abdichten des besagten Ventilsitzes und eine Kolbendichtung (44) flussabwärts der besagten ersten Abdichtung, die der besagte Kolben verschließen kann, um den Flüssigkeitsstrom durch besagtes Flusskammerelement zu unterbinden; weiterhin gehören zum besagten Flusskammerelement Stopvorrichtungen, die den Gang des besagten Kolbens über die Achse hinaus verhindern, zur Stopvorrichtung gehört eine Vielzahl von in Abständen angebrachten Zinken (64), die so um den Umfang an einem Ende des besagten Flusskammerelements angebracht sind, dass sie dem einen, besagten Ende des besagten Gehäuses anliegen, besagte Zinken erstrecken sich strahlenförmig in die besagte erste Kammer (36), um somit den Gang des besagten Kolbens (38) darüber hinaus zu verhindern, die Abstände zwischen den nebeneinanderliegenden Zinken (64) bilden Öffnungen, durch die Flüssigkeit im Strom von besagtem Einlass zum besagten Abfluss fließen kann, besagter Kolben und Flusskammerelement im Verhältnis zum besagten Ventil plaziert, sodass der Flüssigkeitsdruck den besagten Kolben in eine Richtung gegen die besagte Kolbendichtung (44) treibt; und,
ein Antrieb (46), der besagten Kolben axial und ohne Drehung bewegt zwischen einer geschlossenen Einstellung, in welcher der besagte Kolben (38) der besagten Kolbendichtung (44) anliegt mit vorherbestimmtem Druck, um den Flüssigkeitsstrom durch besagtes Flusskammerelement zu verhindern und einer weit geöffneten Einstellung, in welcher der besagte Kolben von der besagten Kolbendichtung verdrängt wird und gegen die besagte Stopvorrichtung drückt, um somit maximalen Flüssigkeitsdurchfluss durch besagtes Flusskammerelement zu ermöglichen;
wobei, wenn besagtes Gehäuse an besagtes Ventil angeschlossen ist, die besagte erste Dichtung (42) dem Ventilsitz anliegt und besagter Antrieb (46) so betrieben werden kann, dass sich besagter Kolben axial durch die besagte Kammer zwischen besagter geschlossener Einstellung und besagter voll geöffneter Einstellung bewegen kann, um den Flüssigkeitsstrom von besagtem Einlass zum besagten Abfluss zu regulieren.

2. Eine Ventilpatrone gemäß Patentanspruch 1, worin besagtes Flusskammerelement (40) separat vom besagten Gehäuse ist und reibungsmäßig mit dem einen besagten Ende des besagten Gehäuses verbunden ist.

3. Eine Ventilpatrone gemäß Patentanspruch 2, worin das eine besagte Ende des besagten Gehäuses mit einer umlaufenden Fuge (100) versehen ist, wohinein besagte Zinken (64) passen.

4. Eine Venulpatrone gemäß Patentanspruch 4, worin der äußere Umfang der besagten umlaufenden Fuge (100) kleiner ist als der äußere Umfang der besagten Zinken (64), sodass es eine Presspassung zwischen der besagten umlaufenden Fuge und den besagten Zinken formt, und somit das besagte Flusskammerelement an besagtes Gehäuse hält.

5. Eine Ventilpatrone gemäß Patentanspruch 1, worin besagtes Flusskammerelement (40) aus einem ersten Teil (52) besteht, zu dem besagte Zinken (64) und besagte Kolbendichtungen (44) gehören und einem zweiten Teil (54), zu dem die besagte erste Dichtung (42) gehört; besagtes erstes und zweites Teil werden durch Presspassung zusammengehalten.

6. Eine Ventilpatrone gemäß Patentanspruch 5, worin die besagten ersten (52) und zweiten Teile (54) eine zweite Kammer (68) bilden, zwischen denen sich ein Rückschlagventil (70) befindet, um den Flüssigkeitsrückfluss durch besagtes Flusskammer-element vom besagten Abfluss in Richtung des besagten Einlasses zu verhindern.

7. Eine Ventilpatrone gemäß Patentanspruch 6, worin der besagte Antrieb aus einem elektropneumatischen Ventil (48) besteht, welches an den besagten Kolben gekuppelt ist.

8. Eine Ventilpatrone gemäß Patentanspruch 7, worin die lineare Position des besagten elektropneumatischen Ventils (48) innerhalb des besagten Gehäuses eingestellt werden kann, um die Position des Kolbens (38) in der weit geöffneten Einstellung zu verändern und somit den Durchfluss von Flüssigkeit durch besagtes Ventil stetig zu ändern

9. Eine Ventilpatrone gemäß Patentanspruch 6, worin der besagte Antrieb aus einer drehbaren Spindel (46) besteht, unterstützt durch besagtes Gehäuse und verlängert durch besagte erste Kammer (36), besagte Spindel ist in einer Weise an den besagten Kolben gekuppelt, dass die Drehung einer vorgegebenen Anzahl von Umdrehungen der besagten Spindel zuerst relative Achsenbewegung zwischen besagtem Kolben und besagter Spindel in eine erste Richtung verursacht, worauf die relative Axialposition besagter Spindel und Kolben unverändert bleibt als Reaktion auf weitere Drehungen besagter Spindel im besagten ersten Sinn, und die Drehung einer vorgegebenen Anzahl von Umdrehungen der besagten Spindel in die Gegenrichtung verursacht relative Axialbewegung besagter Spindel und Kolben in die Gegenrichtung worauf die relative Axialposition besagter Spindel und Kolben unverändert bleibt als Reaktion auf weitere Drehungen besagter Spindel in die besagte Gegenrichtung.

10. Eine Ventilpatrone gemäß Patentanspruch 9, die zusätzlich eine Kupplungsvorrichtung (84) einschließt um die besagte Spindel mit dem besagten Kolben zu kuppeln, wobei der Kolben so an die besagte Kupplungsvorrichtung gekuppelt ist, dass eine relative Drehung zwischen besagtem Kolben und besagter Kupplungsvorrichtung ermöglicht ist.

11. Eine Ventilpatrone gemäß Patentanspruch 10, die zusätzlich eine Sperrklinkenvorrichtung (92, 94, 102) oder Sperrmechanismus enthält, der zwischen besagter Kupplungsvorrichtung (84) und besagtem Gehäuse (32) fungiert, um eine Drehung der besagten Kupplungsvorrichtung während der besagten vorgegebenen Anzahl von Umdrehungen der besagten Spindel zu widerstehen.

12. Eine Ventilpatrone gemäß Patentanspruch 11, worin die besagte Sperrklinkenvorrichtung oder Sperrmechanismus eine Vielzahl von axial verlaufenden Rillen (102), die sich auf der Umfangsoberfläche der besagten ersten Kammer (36) befinden und mindestens einen Vorsprung (92), der mit der besagten Kupplungsvorrichtung verbunden ist und in eine der besagten Rillen eingreift, enthält.

13. Eine Ventilpatrone gemäß Patentanspruch 12, worin besagte Kupplungsvorrichtung mit mindestens einem verlängerten Finger (94) versehen ist, wobei auf jedem dieser Finger besagter Vorsprung (92) gebildet ist.

14. Eine Ventilpatrone gemäß Patentanspruch 13, worin besagte Kupplungsvorrichtung (84) zusätzlich eine Umfangsrille (88) mit einschliesst für das Einfassen eines Vorsprungs (82), der sich am und teilweise um den Umfang des besagten Kolbens (38) herum befindet, und somit die relative Drehung zwischen dem besagten Kolben und der besagten Kupplungsvorrichtung ermöglicht.

15. Eine Ventilpatrone für ein Ventil mit Flüssigkeitseinlass (14), Flüssigkeitsabfluss (16) und einem Ventilsitz (18), welche die Flüssigkeitsübermittlung zwischen besagtem Flüssigkeitseinlass und Flüssigkeits-Abfluss herstellt; besagte Ventilpatrone schließt mit ein:
Ein der Kupplung zu besagtem Ventil angepasstes Gehäuse (32), besagtes Gehäuse ist mit einer axial verlängerten ersten Kammer (36) versehen
Ein sich innerhalb der ersten Kammer bewegender Kolben (38) zur Regulierung des Flüssigkeitstroms durch besagtes Ventil;
ein sich innerhalb der besagten ersten Kammer bewegender Kolben (38) zur Regulierung des Flüssigkeitstroms durch besagtes Ventil;
ein an einem Ende des besagten Gehäuses angebrachtes Flusskammerelement (40) und durch welches sich der besagte Kolben bewegen kann, besagtes Flusskammerelement hat eine erste Dichtung (42) zum Abdichten des besagten Ventilsitzes und eine Kolbendichtung (44) flussabwärts der besagten ersten Abdichtung, die der besagte Kolben verschließen kann, um den Flüssigkeitsstrom durch besagtes Flusskammerelement zu unterbinden; weiterhin gehören zum besagten Flusskammerelement Stopvorrichtungen, die den Gang des besagten Kolbens über die Achse hinaus verhindern, zur Stopvorrichtung gehört eine Vielzahl von in Abständen angebrachten Zinken (64), die so um den Umfang an einem Ende des besagten Flusskammerelements angebracht sind, dass sie dem einen, besagten Ende des besagten Gehäuses anliegen, besagte Zinken erstrecken sich strahlenförmig in die besagte erste Kammer (36), um somit den Gang des besagten Kolbens (38) darüber hinaus zu verhindern, die Abstände zwischen den nebeneinanderliegenden Zinken (64) bilden Öffnungen, durch die Flüssigkeit im Strom von besagtem Einlass zum besagten Abfluss fließen kann, besagter Kolben und Flusskammerelement im Verhältnis zum besagten Ventil plaziert, sodass der Flüssigkeitsdruck den besagten Kolben in eine Richtung gegen die besagte Kolbendichtung (44) zu treiben neigt; und,
ein elektropneumatisches Ventil (48) um besagten Kolben axial ohne Drehung zwischen der geschlossenen Einstellung, in welcher der besagte Kolben der besagten Kolbendichtung mit vorgegebenem Druck anliegt, um Flüssigkeitsentweichung durch besagtes Flusskammerelement zu verhindern und der weit geöffneten Einstellung, bei der besagter Kolben von besagter Kolbendichtung verdrängt wird und besagter Stopvorrichtung anliegt, um somit maximalen Flüssigkeitsstrom durch besagtes Flusskammerelement zu ermöglichen;
wodurch, wenn besagtes Gehäuse an besagtes Ventil gekuppelt ist, besagte erste Abdichtung dem besagten Ventilsitz anliegt und besagtes elektropneumatisches Ventil (48) betätigt werden kann, um besagten Kolben axial durch besagte Kammer zwischen der geschlossenen Einstellung und der weit geöffneten Einstellung zu bewegen, um den Flüssigkeitsstrom von besagtem Einlass zum besagten Abfluss zu regulieren.

## Revendications

1. Une cartouche de valve pour une valve munie d'un orifice d'arrivée de fluide (14), d'un orifice de sortie de fluide (16) et d'un siège de soupape (18) qui permet la communication des fluides entre lesdits orifices. Cette cartouche comprend:
un boitier (32) fait pour être couplé avec la valve sus-mentionnée, Ce boitier comprend une première cavité (36) qui s'étend dans le sens de l'axe;
un piston (38) mobile dans ladite cavité qui contrôle le débit de fluide dans cette valve;
un élément de chambre de débit(40) qui est placé à un bout dudit boitier et par lequel le piston peut passer; cet élément de chambre de débit a un premier joint (42) pour rendre le siège de valve étanche et un joint de piston (44) en aval du premier joint, grâce auquel le piston bloque la circulation de fluide au travers de cette chambre de débit; de plus, cet élément de la chambre de débit est pourvu de butées qui empêchent ledit piston d'aller plus avant dans le sens de l'axe; ces butées incluent un certain nombre d'attaches (64) disposées à intervalles réguliers autour d'une extrémité de l'élément de chambre de débit déjà mentionné, de façon à s'appuyer sur le boitier en question; lesdites attaches s'étendent radialement dans la première cavité (36) et empêchent le piston (38) d'aller plus avant; l'espace entre les attaches voisines (64) forme des ouvertures par lesquelles le fluide peut couler dans son trajet entre l'orifice d'arrivée et l'orifice de sortie ci-dessus mentionnés; lesdits piston et élément de chambre de débit sont placés par rapport à la valve en question de façon à ce que la pression du fluide s'effectue dans une direction forçant le piston contre le joint de piston (44); et
un actionneur (46) qui actionne le piston en question dans le sens de l'axe sans effectuer de rotation entre une position fermée où ledit piston (38) repose contre le joint de piston (44) à une pression pré-déterminée pour éviter que le fluide ne coule dans l'élément de chambre de débit mentionné ci-dessus; et une position totalement ouverte où ledit piston quitte le joint de piston et va s'appuyer sur les butées, permettant un débit maximum de fluide dans l'élément de chambre de débit;
de cette manière, quand ledit boitier est couplé à la valve en question, le premier joint (42) repose sur le siège de la valve déjà mentionné; le susdit actionneur (46) peut alors être enclenché pour actionner le piston axialement dans ladite cavité entre la position fermée et la position totalement ouverte pour contrôler le débit de fluide de l'orifice d'arrivée vers l'orifice de sortie.

2. Une cartouche de valve en accord avec la Revendication 1 selon laquelle l'élément de chambre de débit (40) ci-dessus mentionné est formé séparément dudit boitier et couplé par friction à l'extrémité déjà mentionnée dudit boitier.

3. Une cartouche de valve en accord avec la Revendication 2 selon laquelle l'extrémité en question dudit boitier possède un rabat (100) sur son pourtour pour recevoir lesdites attaches (64).

4. Une cartouche de valve en accord avec la Revendication 4 selon laquelle le diamètre externe du rabat du pourtour (100) est plus petit que le diamètre externe desdites attaches (64) de façon à ce que, du fait de ce rabat de pourtour et desdites attaches, l'élément de chambre de débit s'ajuste au boitier par pression.

5. Une cartouche de valve en accord avec la Revendication 1 selon laquelle l'élément de chambre de débit (40) comprend une première pièce (52) qui inclut les attaches (64) et le joint de piston déjà mentionnés (44) et une seconde pièce (54) qui inclut le premier joint (42); ces pièces sont emboitées par pression.

6. Une cartouche de valve en accord avec la Revendication 5 selon laquelle ces deux pièces (52 et 54) définissent une deuxième cavité (68), où est installée une valve anti-retour (70) destinée à empêcher le passage de fluide dans l'élément de la chambre de débit (40), de l'orifice de sortie vers l'orifice d'arrivée.

7. Une cartouche de valve en accord avec la Revendication 6 selon laquelle l'actionneur comprend un solénoïde (48) couplé audit piston (38).

8. Une cartouche de valve en accord avec la Revendication 7 selon laquelle la position linéaire de ce solénoïde (48) au sein de ce boitier peut être changée pour varier la position du piston (38) lorsqu'il est en position totalement ouverte, afin de varier progressivement le débit de fluide à travers la valve en question.

9. Une cartouche de valve en accord avec la Revendication 6 selon laquelle l'actionneur comprend un arbre (46) que le boitier soutient, en cas de rotation, et qui se prolonge jusque dans la première cavité (36); cet arbre est couplé au piston de telle manière qu'une rotation, pour un nombre pré-déterminé de révolutions de cet arbre dans un premier sens, causera un mouvement axial relatif entre ledit piston et ledit arbre dans une première direction; dans ce cas, la position axiale relative dudit arbre et du piston restera inchangée en réponse à de nouvelles rotations de l'arbre dans le premier sens sus-mentionné, tandis que la rotation pour un nombre prédéterminé de révolutions dudit arbre dans le sens opposé causera un mouvement axial relatif entre le piston et l'arbre dans une direction opposée; dans ce cas, la position axiale relative de l'arbre et du piston restera inchangée en réponse à de nouvelles rotations de l'arbre dans ladite direction opposée.

10. Une cartouche de valve en accord avec la Revendication 9 inclut, d'autre part, un mécanisme de couplage (84) destiné à coupler l'arbre (46) et le piston (38); le piston sera couplé audit mécanisme de couplage d'une telle manière à autoriser une rotation relative entre le piston et le couplage.

11. Une cartouche de valve en accord avec la Revendication 10 inclut, de plus, un dispositif de détente (92, 94, 102) ou encore d'encliquetage entre le mécanisme de couplage ci-dessus (84) et le boitier (32) pour bloquer toute rotation dudit mécanisme de couplage pendant ce nombre préderminé de révolutions de l'arbre.

12. Une cartouche de valve en accord avec la Revendication 11 selon laquelle ce dispositif de détente ou d'encliquetage inclut plusieurs canelures (102) dans le sens de l'axe, imprimées sur la surface de toute la circonférence de la première cavité ci-dessus (36), et au moins une protrusion (92) couplée au mécanisme de couplage pour s'engager dans l'une de ces canelures.

13. Une cartouche de valve en accord avec la Revendication 12 selon laquelle le mécanisme de couplage (84) est équipée au moins d'un doigt allongé (94); sur chacun d'entre eux est fixée une des profusions mentionnées (92).

14. Une cartouche de valve en accord avec la Revendication 13 selon laquelle le mécanisme de couplage (84) inclut également une canelure de circonférence (88) pour accrocher une languette (82) qui y est fixée et qui s'étend sur une partie de la circonférence dudit piston (38), de manière à faciliter la rotation relative, décrite plus haut, entre le piston et le mécanisme de couplage.

15. Une cartouche de valve pour une valve munie d'un orifice d'arrivée de fluide (14), d'un orifice de sortie de fluide (16) et d'un siège de valve (18) qui permet la communication de fluide entre les dits orifices. Ladite cartouche inclut:
un boitier (32) fait pour être couplé avec la valve sus-mentionnée. Ce boitier comprend une première cavité (36) s'étendant dans le sens de l'axe;
un piston (38) mobile dans ladite première cavité qui contrôle le débit de fluide dans cette valve;
un élément de chambre de débit (40) qui est placé à un bout dudit boîtier et par lequel le piston peut passer; cet élément de chambre de débit a un premier joint (42) pour rendre le siège étanche et un joint de piston (44) en aval du premier joint, grâce auquel le piston bloque le passage de fluide au travers de cette chambre de débit; de plus, cet élément de la chambre de débit est pourvu de butées qui empêchent ledit piston d'avancer plus avant dans le sens de l'axe; ces butées incluent un certain nombre d'attaches (64) disposées à intervalles réguliers autour d'une extrémité de l'élément de chambre de débit déjà mentionné, de façon à s'appuyer sur le boitier en question; lesdites attaches s'étendent radialement dans la première cavité (36) sus-mentionnée et empêchent le piston (38) d'aller plus avant; l'espace entre les attaches voisines (64) forme des ouvertures par lesquelles le fluide peut couler dans son trajet entre l'orifice d'arrivée et l'orifice de sortie ci-dessus mentionnés; lesdits piston et élément de chambre de débit sont placés par rapport à la valve en question de façon à ce que la pression du fluide s'effectue dans une direction forçant le piston (38) contre le joint de piston (44); et
un solénoïde (48) pour actionner ledit piston dans le sens de l'axe sans rotation entre la position fermée dans laquelle le piston s'appuie sur le joint de piston d'une pression pré-déterminée pour empêcher le passage de fluide au travers de l'élément de chambre de débit, et une position totalement ouverte dans laquelle ledit piston quitte le joint de piston et arrive contre les butées pour permettre un débit maximum du fluide dans l'élément de chambre de débit;
de cette manière, quand ledit boitier est couplé à la valve en question, le premier joint repose sur le siège de la valve déjà mentionné; le sus-dit solénoïde (48) peut alors être enclenché pour actionner ledit piston axialement dans ladite cavité entre la position fermée et la position totalement ouverte pour contrôler le débit de fluide de l'orifice d'arrivée vers l'orifice de sortie.
